Europäisches Patentamt

(19) European Patent Office

Office européen des brevets

(11) Publication number: **0 312 326**
**A1**

## (12) EUROPEAN PATENT APPLICATION

(21) Application number: **88309532.5**

(22) Date of filing: **12.10.88**

(51) Int. Cl.⁴: **A 01 C 7/08**
**A 01 C 15/04**

(30) Priority: **15.10.87 GB 8724212**

(43) Date of publication of application:
**19.04.89 Bulletin 89/16**

(84) Designated Contracting States: **DE FR NL SE**

(71) Applicant: **MASSEY-FERGUSON SERVICES N.V.**
**Abraham de Veerstraat 7A**
**Curaçao (AN)**

(72) Inventor: **Bailey, Alfred John**
**Lavender Hall Lane**
**Berkswell Warwickshire (GB)**

(74) Representative: **Hogg, Jeffery Keith et al**
**Varity Holdings Limited Patent Department**
**Stareton, Nr Kenilworth Warwickshire CV8 2LJ (GB)**

(54) **Agricultural drill.**

(57) An agricultural drill has a set of seed dispensing units (5, 53) driven by a main drive shaft (24, 54) so as to deliver seed to a set of coulters (4, 56) arranged laterally across the width of the drill and a tramlining mechanism comprising a clutch (38, 58) through which the main drive shaft (24, 54) drives a second drive shaft (24', 54') which is drivingly connected to all of those seed dispensing units (5', 53') which deliver seed to coulters (4', 56') aligned with the wheel tracks (T) of the tractor carrying the drill so that the clutch (38, 58) controls the formation of both tramlines. In the case of a pneumatic drill in which seed is conveyed by air to the coulters (4), the second drive shaft (24') may be coaxial with and located at one end of the main drive shaft (24). In the case of a conventional drill in which seed falls through drop tubes to the coulters (4), the second drive shaft (54') extends transversely of the drill alongside the main drive shaft (54), and the seed dispensing units (53') on the second drive shaft (54') are located laterally adjacent the coulters (56') aligned with the tractor wheel tracks (T).

FIG.1

EP 0 312 326 A1

Bundesdruckerei Berlin

**Description**

## AGRICULTURAL DRILL

Technical Field

This invention relates to agricultural drills, especially drills having a tramlining mechanism that is operable to stop sowing seeds in the tracks of the tractor moving the drill so as to form unsown tracks or tramlines in the crop for the passage of the tractor in subsequent crop treatment processes.

It is well known to provide agricultural drills with a tramlining mechanism comprising a shutter associated with each of those seed dispensing units feeding seeds to the coulters aligned with the wheel tracks. Operation of the shutter serves to cut-off the supply of seeds to the coulters. An example of a tramlining mechanism of this type is disclosed in British Patent No. 2034562.

Alternatively, it is known to provide a clutch that is operable to disconnect drive to those seed dispensing units feeding the coulters along the wheel tracks so as to stop the supply of seed to them. This arrangement has the advantage that the supply of seed is stopped as soon as the clutch is operated whereas the shutter type of tramlining mechanism usually allows a residual quantity of seed to be dispensed after the shutter is operated, this seed being retained within the dispensing unit and being downstream of the shutter. With small seed, such as rape seed, even a small residual quantity can supply a long length of a seed row and thus obliterate the intended tramline. However, the clutch arrangements proposed have often been mechanically complicated and have been provided for the dispensing units associated with each of the two tramlines.

It is also known in the case of pneumatic seed drills, to provide a tramlining mechanism comprising a shutter or valve in each of the conduits downstream of those seed dispensing units feeding the coulters along the wheel tracks so that the flow of air and seed is stopped.

Disclosure of the Invention

An object of the present invention is to provide an agricultural drill with a tramlining mechanism that is simple and effective.

According to the present invention, an agricultural drill has a set of coulters arranged transversely across the width of the drill to sow rows of seeds as the drill is moved forwards by a tractor when in work, a set of seed dispensing units each associated with a coulter so as to deliver seed to that coulter when in work, a main drive shaft coupled to each of the seed dispensing units so as to drive them and deliver seed to the coulters, and a tramlining mechanism comprising a clutch through which the main drive shaft is coupled to a seed dispensing unit that delivers seed to a coulter aligned with a wheel track of the tractor so that operation of the clutch serves to disconnect drive to said seed dispensing unit to stop the delivery of seed and form a tramline, characterised in that said clutch is adapted to couple said main drive shaft to a second drive shaft which is drivingly connected to all of those seed dispensing units which are to deliver seed to the coulters aligned with the wheel tracks of the tractor so that said clutch controls the formation of both tramlines.

Thus, the invention groups those seed dispensing units that supply seed to the wheel tracks so that they are all on a second drive shaft and then provides one clutch between the main drive shaft and the second drive shaft to disconnect drive to these grouped seed dispensing units for tramlining.

In the case of a pneumatic seed drill, it is a simple matter to group seed dispensing units substantially independently of the coulters that they supply, because of the manner in which the seed is conveyed forcibly in a flow of air as compared with conventional drills in which seed simply falls down conduits to the coulters. Thus, in the case of a pneumatic drill, those seed dispensing for tramlining can be grouped on said second shaft at one end of, and coaxially with, the main drive shaft with the clutch connected between the two.

In the case of a drill having two drive shafts each drivingly connected to a set of seed dispensing units, the seed dispensing units on one shaft can be located laterally across the whole width of the drill to deliver seed to the coulters outside of the wheel tracks, and the seed dispensing units on the other shaft can be limited to those located to deliver seed to the coulters aligned with the wheel tracks for tramlining, said clutch controlling the drive to said other shaft for tramlining. The two drive shafts may comprise two parallel drive shafts extending the full width of the drill, each below a respective inclined floor of a hopper that supplies seed to all of the seed dispensing units.

Description of the Drawings

The invention will now be described by way of example with reference to the accompanying drawings in which:-

Figure 1 is a rear schematic view of a pneumatic seed drill fitted with a tramlining mechanism according to the invention,

Figure 2 is a side elevation of the drill of Figure 1,

Figure 3 is a more detailed view of the seed dispensing units and clutch that form part of the tramlining mechanism in Figure 1,

Figure 4 is a cross-section through the clutch in Figure 3, and

Figure 5 is a schematic plan view of a seed drill fitted with a tramlining mechanism according to a second embodiment of the invention.

Best Mode of Carrying out the Invention

The illustrated drill comprises a frame 1 carrying a seed hopper 2 and a transversely extending control beam on which is mounted a plurality of coulters 4. A plurality of seed dispensing units 5 dispense seed from the hopper into pneumatic distribution means 6 that conveys the seed in a flow of air to each coulter.

The control beam 3 is supported in rotary bearings 7 attached to the frame that allows the beam to rotate about its longitudinal axis, and a hydraulic ram 8 is connected between the frame 1 and a lever arm 9 on the beam 3 so as to rotate the latter and force the coulters into working engagement with the ground.

The control beam 3 is formed as a folding beam comprising a centre portion 3″ lying within the width of the hopper and the frame, and an outer portion 3‴ pivotally connected to each end of the central portion so as to pivotable upwards to a transport position. The pivotal connection is formed by an upright hinge 10 adapted to receive a removable retaining pin 11 to hold the hinge closed with the outer portion lowered. Each outer portion 3‴ is braced at its outer end by a strut assembly 14 that is pivotally connected to the adjacent side wall 15 of the hopper at 16 and folds upwards with the respective outer portions 3‴.

An hydraulic ram 12 is connected between posts 13 at the inner end of each outer portion 3‴ and is operated to raise both outer portions simultaneously.

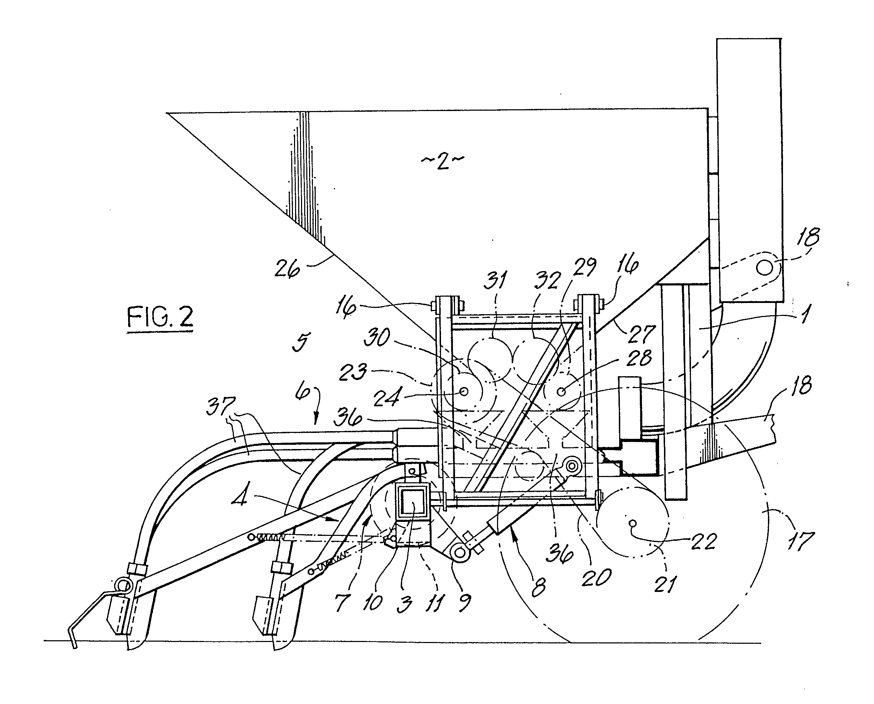

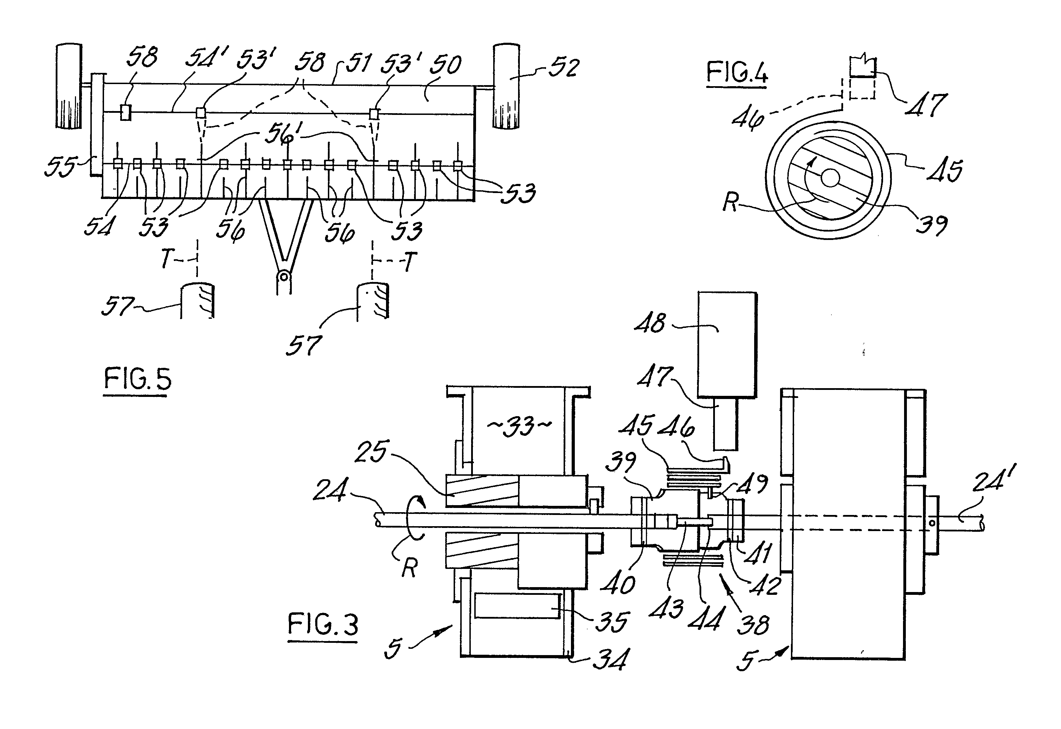

Landwheels 17 are mounted either side of the frame 1 to support the drill when sowing, the whole drill being carried on the three-point linkage of a tractor via connections 18 so that it can be lifted off the ground for transportation. A mechanical drive system 19 at one side of the drill is connected between the landwheel 17 on that side and the seed dispensing units 5 so as to drive the latter. As shown in Figures 2 and 3, the drive system comprises a chain drive 20 between a sprocket 21 on the axle 22 of the landwheel 17 and a sprocket 23 at one end of a drive shaft 24 on which the rotary feed drum 25 of each of a set of seed dispensing units are mounted. This first set of seed dispensing units is mounted on the rearward facing lower wall 26 of the hopper 2. A second set of seed dispensing units is mounted on the forward facing lower wall 27 of the hopper 2 and the rotary feed drums 25 of these units are mounted on a drive shaft 28 which carries a sprocket 29 on that end adjacent the drive system 19, and drive is transferred between the two drive shafts 24, 28 of the two sets of metering units via sprocket 30 on the shaft 24, two idler sprockets 31, 32, and the sprockets 29 of the shaft 28.

The seed dispensing units 5 of each operate through rotation of the rotary feed drums 25 which serve to feed seed from a seed chamber 23 in an external housing 34, over a lower adjustable flap 35. The seed then falls into a venturi unit 36 of the pneumatic distribution means 6 which contains the seed in a flow of air that is directed through a flexible conduit 37 to a repective coulter 4.

Details of the construction of the seed dispensing units can be obtained from United Kingdom Patent Specification No. 2163332, although it will be appreciated that this is only one example, and other forms of the rotary type of seed dispensing units may be used.

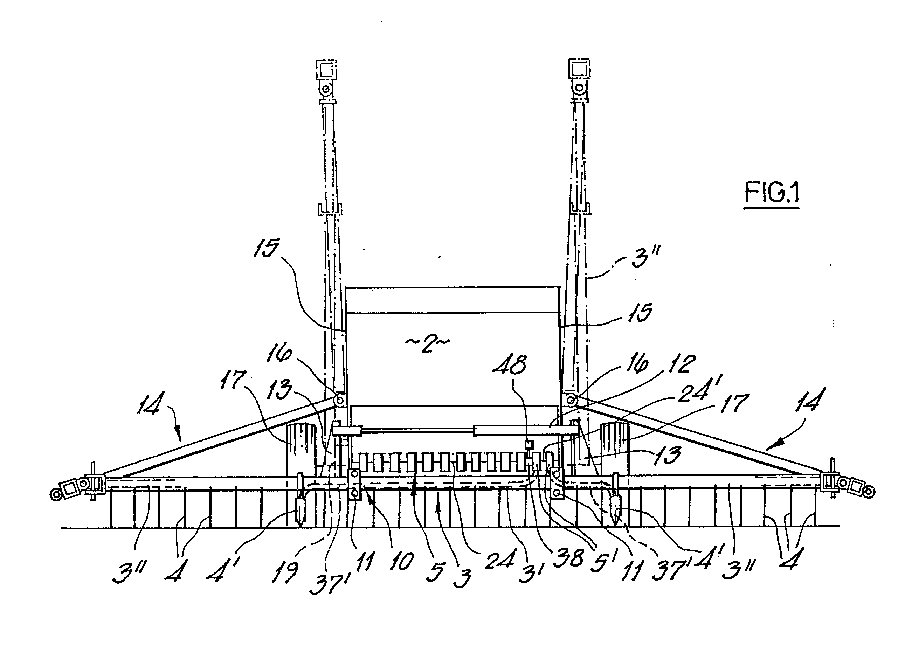

As seen in Figure 1, a single coulter 4′ is aligned with each landwheel 17, which in turn is arranged on a track width to match the tractor that carries the drill. Thus the wheels of the tractor and drill pass over the same track and, in normal operation, seeds are sown by the coulters along these tracks. However, a tramlining mechanism is provided that is operable to stop the supply of seed to those coulters aligned with the wheels so that unsown tracks or tramlines are left which are visible in the growing crop and can be used for the passage of a tractor in subsequent crop treatment processes.

The tramlining mechanism comprises a clutch 38 that is located in the drive shaft 24 so as to disconnect drive to an end portion 24′ of the shaft 24 remote from the drive system 19 carrying two seed dispensing units 5′ that feed seed via conduits 37′ to the coulters 4′ aligned with the landwheels 17, as shown in Figure 1.

The clutch 38 may take any form, but it takes the form of a wrap-spring clutch, as illustrated in Figures 3 and 4, comprising a driving portion 39 connected by a cross pin 40 to the end of the shaft 24 and a driven portion 41 connected by a cross pin 42 to the end portion 24′ of the shaft 24. A coaxial pin 43 aligns both the driving and driven portions 39, 41 and holds them together axially by a circlip 44. A coiled strip of spring steel 45 surrounds both the driving and driven portions 39, 41 and is coiled on itself from its inner end outwards and in the same sense as rotation of the shaft 24 (arrow 24) so that when unrestrained, the spring wraps itself onto both portions and grips them to transfer drive from the shaft 24 to the end portion 24′. The outer end of the spring 45 is formed with an abutment 46 that extends radially outwards for engagement by a movable stop 47 under the control of an actuator 48. Thus when the actuator 48 is operated, the stop 47 is moved radially inwards to engage the abutment 46 of the spring 45. The rotary action of the driving portion 39 then has the effect of unwrapping the spring from the driving and driven portions so that no drive is transferred between the shaft 24 and end portion 24′.

The inner end of the spring 45 is formed with a lug 49 that engages a recess in the outer surface of the driven portion 41 so that when the actuator 48 operates to unwrap the spring, the driven portion 41 is stopped from rotating with the spring 45. Thus the clutch has a braking action on the end portion 24′ of the drive shaft when disconnected, thereby producing an immediate cut-off in the supply of seed.

A control system is provided to control operation of the actuator 48 so as to determine which bouts are formed with tramlines. The control system may be a simple manually-operated control system in which the tractor driver selects tramlining at the beginning of those bouts when it is required. Alternatively, the control system may incorporate a bout-indexing system which is automatically operated between bouts and determines which bouts are formed with tramlines. For example, a sensor can be provided to sense operation of the coulter actuation ram 8 so that a bout signal is produced every time the ram 8 operates to raise the coulters out of work. The sensor may be mechanically or hydraulically actuated with an electrical output signal that produces a count in an electronic controller. This controller is preset to produce an electrical output signal on specified counts, for example, every third count, and this serves to operate the actuator 48, which may take the form of a solenoid.

In alternative embodiments of the invention, the control system may be mechanical or hydraulic.

An alternative embodiment of the invention is illustrated in Figure 5 which shows a plan view of a grain only drill having a hopper 50 mounted on a frame 51 having a pair of landwheels 52 on a transverse axis to support the frame 51. A set of seed dispensing units 53 are mounted on the front underside of the hopper and are located transversely across the width of the drill. A drive shaft 54 is connected to each of the seed dispensing units 53 and is driven from the landwheel 52 at one end via a drive mechanism 55 so as to drive the dispensing units 53 and cause them each to deliver seed by gravity through a drop tube (not shown) to a respective adjacent coulter 56 of a set of trailed coulters that are spaced transversely across the width of the drill. Two of the coulters 56' that are aligned with the tracks T of the tractor wheels 57 when towing the drill in work, are not supplied with seed from a dispensing unit 53, but instead are supplied with seed via drop tubes 58 from two adjacent seed dispensing units 53' located on the rear underside of the hopper and driven by a common drive shaft 54' that extends parallel to the drive shaft 54 and is driven from the same drive mechanism 55.

A clutch 59 is connected in an intermediate portion of the drive shaft 54' between the drive mechanism 55 and both seed dispensing units 53' and is operated to disconnect the drive to these seed dispensing units 53' so as to produce tramlines along the lines of the tracks T. The clutch 59 may take the form of a wrap-spring clutch as illustrated in Figures 3 and 4 or may be provided by another form of clutch. Similarly, a mechanical, electrical or hydraulic control system may be provided to operate the clutch 59 to control tramlining.

### Claims

1. An agricultural drill having a set of coulters (4) arranged transversely across the width of the drill to sow rows of seeds as the drill is moved forwards by a tractor when in work, a set of seed dispensing units (5) each associated with a coulter (4) so as to deliver seed to that coulter when in work, a main drive shaft (24) coupled to each of the seed dispensing units (5) so as to drive them and deliver seed to the coulters (4), and a tramlining mechanism comprising a clutch (38) through which the main drive shaft (24) is coupled to a seed dispensing unit (51) that delivers seed to a coulter (4') aligned with a wheel track of the tractor so that operation of the clutch (38) serves to disconnect drive to said seed dispensing unit (5') to stop the delivery of seed and form a tramline, characterised in that the said clutch (38) is adapted to couple said main drive shaft (24) to a second drive shaft (24') which is drivingly connected to all of those seed dispensing units (5') which are to deliver seed to the coulters (4') aligned with the wheel tracks of the tractor so that said clutch (38) controls the formation of both tramlines.

2. An agricultural drill as claimed in Claim 1 further characterised in that said second drive shaft (24') is coaxial with the main drive shaft (24) and is located at one end of the main drive shaft (24).

3. An agricultural drill as claimed in Claim 2 further characterised in that the main drive shaft (24) is connected to a drive mechanism (19) at one end and is connected via said clutch (38) to the second drive shaft (24') at its other end.

4. An agricultural drill as claimed in any one of the preceding claims further characterised in that pneumatic conveying means (6) is provided to carry the seed from the seed dispensing units (15) to the coulters (4).

5. An agricultural drill as claimed in Claim 1 further characterised in that the second drive shaft (54') extends transversely of the drill alongside the main drive shaft (54).

6. An agricultural drill as claimed in Claim 5 further characterised in that drop tubes (58) are provided that conduct seed by gravity from the seed dispensing units (53) to the coulters (56) and in which those seed dispensing units (53') on the second drive shaft (54') are located laterally so that they deliver seed to the coulters (56) aligned with the tractor wheel tracks (T).

FIG.1

FIG. 2

EP 0 312 326 A1

EP 0 312 326 A1

FIG.5

FIG.4

FIG.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0176023 (AMAZONEN WERKE)<br>* page 4, line 24 - page 8, line 4; figures 1, 2, 3 * | 1, 2, 3, 5, 6 | A01C7/08<br>A01C15/04 |
| X | EP-A-0218813 (AMAZONEN WERKE)<br>* page 6, line 5 - page 10, line 29; figures 1, 2, 3 * | 1, 2, 3, 4 | |
| A | AT-A-380765 (PRILLINGER)<br>* page 3, line 5 - line 32; figures 1, 2 * | 1 | |

TECHNICAL FIELDS
SEARCHED (Int. Cl.4)

A01C

The present search report has been drawn up for all claims

| Place of search | Date of completion of the search | Examiner |
|---|---|---|
| THE HAGUE | 11 JANUARY 1989 | VERMANDER R.H. |